# EUROPEAN PATENT SPECIFICATION

(11) **EP 3 591 907 B1**
(45) Date of publication and mention of the grant of the patent: **13.04.2022**
(21) Application number: 18901808.8
(22) Date of filing: 14.06.2018
(51) Int. Cl.: H04L 12/58

(54) **MAIL TRANSMISSION METHOD AND SERVER**
POSTÜBERTRAGUNGSVERFAHREN UND SERVER
PROCÉDÉ DE TRANSMISSION DE COURRIER ET SERVEUR

(30) Priority: 10.05.2018 CN 201810442232
(43) Date of publication of application: 08.01.2020
(73) Proprietor: Wangsu Science & Technology Co., Ltd., Shanghai 200030 (CN)
(72) Inventor: LIN, Sichen, Shanghai 200030 (CN); HUANG, Yuxian, 200030 Xuhui District Shanghai (CN); ZENG, Zhiquan, 200030 Xuhui District Shanghai (CN)
(74) Representative: de Arpe Fernandez, Manuel
(86) International application number: PCT/CN2018/091214
(87) International publication number: WO 2019/214012

(56) References cited:
- CN-A- 104 753 815
- CN-A- 104 753 815
- CN-A- 107 332 908
- CN-A- 108 337 155
- US-A1- 2007 124 415
- US-B2- 8 190 874

## Description

### FIELD OF DISCLOSURE

The present disclosure generally relates to the field of network communication technology and, more particularly, relates to a mail transmission method and a node server.

### BACKGROUND

E-mail is a common means of information exchange in an information-based society. For example, in most companies, one of the most important means of communication is e-mail.

However, in certain application scenarios, there are a large number of situations, such as internal corporate notification, and document delivery, in which emails with the same or similar content are repeatedly transmitted. Emails with the same or similar content may seriously waste the resource of a mail transmission system and affect the mail transmission efficiency.

Reference is made to documents CN 104 753 815 and to US 2007/124415 which have been cited as relating to the state of the art.

### BRIEF SUMMARY OF THE DISCLOSURE

The invention is set out in the appended set of claims. It will be appreciated that the scope of the invention is in accordance with the independent claims. Further features are provided in the dependent claims. The specification may include description outside the scope of the claims provided as background and to assist in understanding the invention. In particular, only embodiments comprising the use of a fragment serial number to denote a sequential number of a data fragment corresponding to the fragment serial number in the mail data fall under the scope of the claims.

The present disclosure provides a mail transmission method, a server and a system thereof, for improving the mail transmission efficiency.

-[0093]

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure.
FIG. 1 is a mail transmission system according to some embodiments of the present disclosure;
FIG. 2 is a flowchart of a mail transmission method according to some embodiments of the present disclosure;
FIG. 3 is a schematic structural diagram of a practical mail transmission system according to some embodiments of the present disclosure;
FIG. 4 is a schematic diagram of a mail transmission process according to some embodiments of the present disclosure;
FIG. 5 is a schematic diagram of a practical mail transmission process in a first node server according to some embodiments of the present disclosure;
FIG. 6 is a schematic diagram of a practical mail transmission process in a second node server according to some embodiments of the present disclosure;
FIG. 7 is a schematic structural diagram of a node server according to some embodiments of the present disclosure;
FIG. 8 is a schematic structural diagram of another node server according to some embodiments of the present disclosure; and
FIG. 9 is a schematic structural diagram of another node server according to some embodiments of the present disclosure.

### DETAILED DESCRIPTION

To make the objective, technical solutions, and advantages of the present disclosure clearer, the present disclosure will be made in detail hereinafter with reference to the accompanying drawings. It is to be understood that the described embodiments are merely partial, but not exhaustive of the embodiments of the present disclosure.

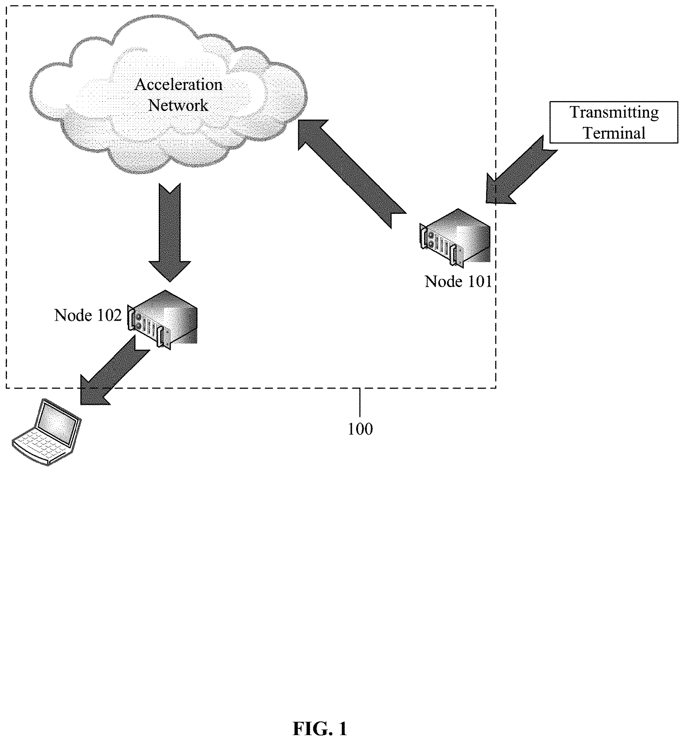

FIG. 1 is a mail transmission system according to some embodiments of the present disclosure. As shown in FIG. 1, the mail transmission system 100 includes a first node 101 and a second node 102, where the first node 101 is configured to receive mail data transmitted by a transmitting terminal, and the second node 102 is configured to transmit the mail data to a receiving terminal. The first node 101 and the second node 102 are connected by a network. In a specific implementation process, the first node 101 and the second node 102 may be nodes in an acceleration network, such as an APPA^{®} acceleration network of Wangsu Science & Technology Co., Ltd. In the APPA^{®} acceleration network, the nodes are distributed across various regions of the world. The system may be divided into a near-terminal and an away-terminal. The near-terminal refers to an APPA^{®} node that is adjacent to a transmitting terminal, that is, the first node 101 in the embodiments of the present disclosure. The away-terminal refers to an APPA^{®} node that is adjacent to a receiving terminal, that is, the second node 102 in the embodiments of the present disclosure. It is to be understood that the transmitting terminal and the receiving terminal may be switched. Accordingly, for any node, it may be switched between the first node 101 and the second node 102. For instance, in the process of transmitting a mail from a mail server to a user terminal, in which the transmitting terminal is the mail server and the receiving terminal is the user terminal, the first node 101 is a node that is adjacent to the mail server, while the second node 102 is a node that is adjacent to the user terminal. In the process of uploading mail data by a user terminal to a mail server, in which the transmitting terminal is the user terminal and the receiving terminal is the mail server, the first node 101 is a node that is adjacent to the user terminal, while the second node 102 is a node that is adjacent to the mail server.

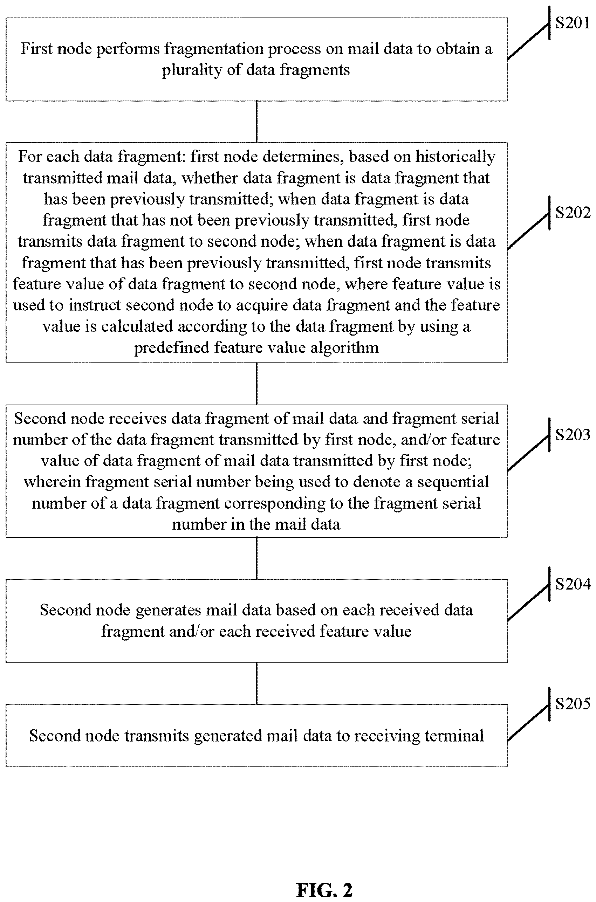

Based on the mail transmission system shown in FIG. 1, the embodiments of the present disclosure provide a mail transmission method. FIG. 2 is a flowchart of a mail transmission method according to some embodiments of the present disclosure. As shown in FIG. 2, the method mainly includes the following steps:
S201: the first node performs a fragmentation process on the mail data to obtain a plurality of data fragments.

S202: for each data fragment, the first node determines, according to historically transmitted mail data, whether the data fragment is a data fragment that has been previously transmitted; when the data fragment is a data fragment that has not been previously transmitted, the first node transmits the data fragment to the second node; when the data fragment is a data fragment that has been previously transmitted, the first node transmits a feature value of the data fragment to the second node, where the feature value is used to instruct the second node to acquire the data fragment.

S203: the second node receives the data fragment of the mail data transmitted by the first node, and/or the feature value of the data fragment of the mail data transmitted by the first node.

S204: the second node generates the mail data according to each received data fragment and/or each received feature value.

S205: the second node transmits the generated mail data to the receiving terminal.

In S201, the mail data in the first node is provided to the first node by the transmitting terminal. In a specific implementation process, the size of a data fragment may be determined according to the actual working environment of a mail system. The smaller the data fragment, the easier it is to hit, but the more the system resource of the first node to be consumed. Conversely, the larger the data fragment, the harder it is to hit, but the less the system resource of the first node to be consumed. Optionally, the first node may fragment the mail data according to certain rule(s), so that when the mail data and the historically transmitted mail data have different initial parts, fragmentation of the mail data to a certain number may allow a countermeasure to be achieved and the subsequent data fragments to be aligned, that is, the subsequent data fragments of the mail data to be consistent with the data fragments of the historically transmitted mail data. Similarly, if it happens that a middle part of the mail data is not consistent with the historically transmitted mail data, as long as there is enough remaining data, the subsequent data fragments may still be aligned.

Optionally, before performing the fragmentation process on the mail data, the first node further parses the mail data, and determines body data of the mail data; and performing the fragmentation process on the mail data includes performing the fragmentation process on the body data of the mail data. It is to be understood that the body data in the present disclosure includes attachment data in a mail. The same or similar mails mainly refer to the repetition of the body data of the mails. Other data, such as mail headers, may be different. Therefore, only the body of a mail may need to be fragmented, while other data may be processed according to the existing technologies.

In S202, the first node compares each data fragment with the historically transmitted mail data to determine whether the data fragment is a data fragment that has been previously transmitted. It should be understood that the historically transmitted mail data refers to the mail data that has been previously transmitted by the mail transmission system. For the first node, the historically transmitted mail data includes the mail data that has been previously transmitted by the first node, and also includes the mail data that has been previously received by the first node. In a specific implementation process, the first node may first break the mail data into a plurality of data fragments, and then compare each data fragment with the historically transmitted mail data; or each time a data fragment is obtained, the data fragment is compared right away with the historically transmitted mail data, and so on.

In a practical implementation, the historically transmitted mail data is cached in the local cache of the first node in the form of data fragments. In the local cache of the first node, each data fragment has a corresponding feature value. For any one data fragment of a to-be-transmitted mail data, the feature value of the data fragment is calculated, and then the local cache of the first node is queried according to the feature value to determine whether the data fragment is a data fragment that has been previously transmitted. It should be understood that, in the disclosed implementation, the local cache of the first node may have not necessarily saved all mail data, but have only saved the data fragments and their corresponding feature values for the mail data that has been previously transmitted. In the embodiments of the present disclosure, the feature value is calculated according to the data fragment by using a predefined feature value algorithm. For example, the MD5 algorithm may be used to calculate a data fragment to obtain the feature value of the data fragment. The size of a feature value is much smaller than the size of a data fragment. Therefore, comparing to transmitting a data fragment to the second node, when the first node transmits a feature value to the second node, much less resource is consumed, thereby achieving a higher transmission efficiency.

Optionally, when the data fragment is a data fragment that has not been previously transmitted, the first node transmits the data fragment to the second node, and also transmits the feature value of the data fragment to the second node. The second node caches the received data fragment and the feature value, so that when the first node needs to transmit the data fragment next time, only the feature value of the data fragment needs to be transmitted. The second node may obtain the data fragment from the local cache of the second node according to the feature value of the data fragment. In another optional implementation, when the data fragment is a data fragment that has not been previously transmitted, the first node transmits the data fragment to the second node. The second node receives the data fragment, obtains the feature value of the data fragment by using a predefined feature value algorithm, and caches the data fragment and the feature value of the data fragment. The above implementations may be flexibly configured in accordance with actual applications.

Optionally, when the data fragment is a data fragment that has not been previously transmitted, the first node further caches the data fragment and the feature value of the data fragment in the local cache of the first node. Based on the historically transmitted mail data, determining, by the first node, whether the data fragment is a data fragment that has been previously transmitted includes: acquiring the feature value of the data fragment; querying the local cache of the first node according to the feature value of the data fragment; when the feature value of the data fragment exists in the local cache, determining that the data fragment is a data fragment that has been previously transmitted; and when the feature value of the data fragment does not exist in the local cache, determining that the data fragment is a data fragment that has not been previously transmitted.

In the above-described solutions, when the data fragment is a data fragment that has not been previously transmitted, the first node stores the data fragment and the feature value of the data fragment in the local cache of the first node. Accordingly, the first node may determine whether the data fragment is a data fragment that has been previously transmitted by querying the local cache. Since the feature value may be directly calculated based on the data fragment and uniquely identify the data fragment, the first node may query the local cache using the feature value to determine whether the data fragment has been previously transmitted. Moreover, since the size of a feature value is much smaller than the size of a data fragment, by comparing the feature values, the processing speed of the first node may be greatly improved.

In S204, for a feature value, the second node may first acquire a data fragment corresponding to the feature value based on the feature value, and then merge a plurality of data fragments into the mail data.

Optionally, when the second node receives the data fragment and the feature value of the data fragment, the second node caches the data fragment and the feature value in correspondence. Optionally, when the second node only receives the data fragment, the second node obtains the feature value of the data fragment by using a predefined feature value algorithm, and then the second node respectively caches the data fragment and the feature value of the data fragment. When the second node only receives the feature value, the second node queries the local cache of the second node based on the feature value to acquire the data fragment corresponding to the feature value.

For any one data fragment, although the first node may have transmitted the data fragment, it may be not transmitted to the second node. Accordingly, after receiving a feature value, the second node may not find the corresponding data fragment in the local cache. Optionally, if the data fragment corresponding to the feature value exists in the local cache of the second node, the second node returns a hit response to the first node. Optionally, if the data fragment corresponding to the feature value does not exist in the local cache of the second node, the second node returns a miss response to the first node, where the miss response includes the feature value. The first node receives the miss response sent by the second node, determines the data fragment corresponding to the feature value based on the feature value included in the miss response, and transmits the data fragment corresponding to the feature value to the second node. The second node receives the data fragment and performs the subsequent process. Optionally, when returning the data fragment, the first node also returns the feature value of the data fragment, to allow the second node to identify and cache the data fragment.

After acquiring all the data fragments of the mail data, the second node combines the data fragments into the mail data. Optionally, the first node transmits a data fragment or the feature value of the data fragment to the second node by using a data packet. When the data fragment is a data fragment that has not been previously transmitted, a first data packet is transmitted to the second node, where the first data packet includes the data fragment, the feature value of the data fragment, and a fragment serial number of the data fragment. When the data fragment is a data fragment that has been previously transmitted, a second data packet is transmitted to the second node, where the second data packet includes the feature value of the data fragment and the fragment serial number of the data fragment. After receiving the second data packet, the second node first acquires the corresponding data fragment according to the feature value in the second data packet. After the data fragments are acquired based on the first data packets and the second data packets, the data fragments are combined into the mail data according to the fragment serial number in each data packet. For example, a data packet 1 includes a data fragment A, a feature value a of the data fragment A, and a fragment serial number x, and a data packet 2 includes a feature value b and a fragment serial number y. According to the feature value b, the second node acquires a data fragment B corresponding to the feature value b. The data fragment A and the data fragment B are combined into the mail data according to the fragment serial number x and the fragment serial number y, respectively.

To describe the mail transmission method provided by the embodiments of the present disclosure more specifically, some specific examples are provided hereinafter for illustration purpose.

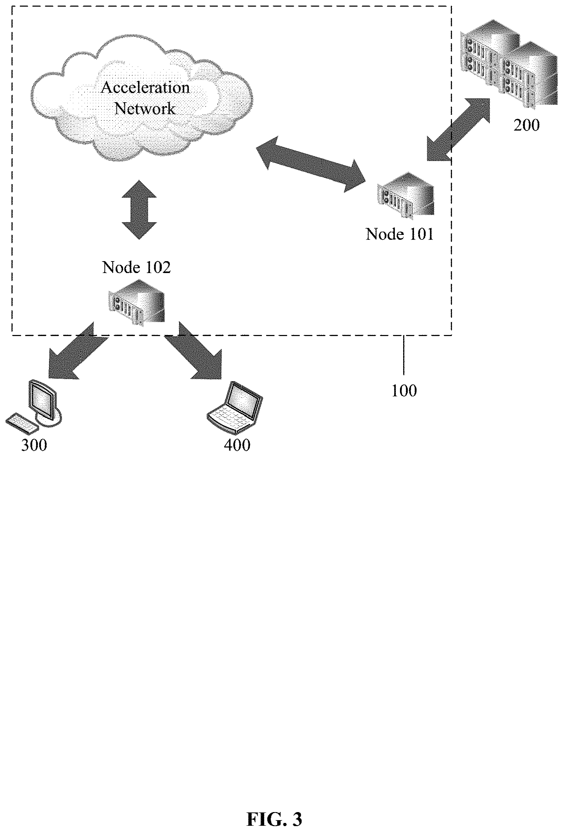

FIG. 3 is a schematic structural diagram of a practical mail transmission system according to some embodiments of the present disclosure. As shown in FIG. 3, the mail transmission system 100 is located between a mail server 200 and a user terminal 300/a user terminal 400. The mail transmission system 100 includes a node 101 and a node 102, where the node 101 is adjacent to the mail server 200, while the node 102 is adjacent to the user terminal 300 and the user terminal 400. It should be noted that, in the embodiments of the present disclosure, or in the existing technologies, a user terminal needs to send a mail request directly or indirectly to a mail server before receiving a mail. The mail request includes the information for a target mail to be received by the user terminal. After the mail server receives the mail request, the mail server will transmit the mail data directly or indirectly to the user terminal.

Based on the mail transmission system 100 shown in FIG. 3, in the embodiments of the present disclosure, the mail transmission method provided by the embodiments of the present disclosure is illustrated in conjunction with two frequently occurred situations with a high mail data repetition rate: group mailing and mail forwarding.

In Situation 1, the mail server 200 sends a mail 1 to the user terminal 300 and the user terminal 400 as a group mail.

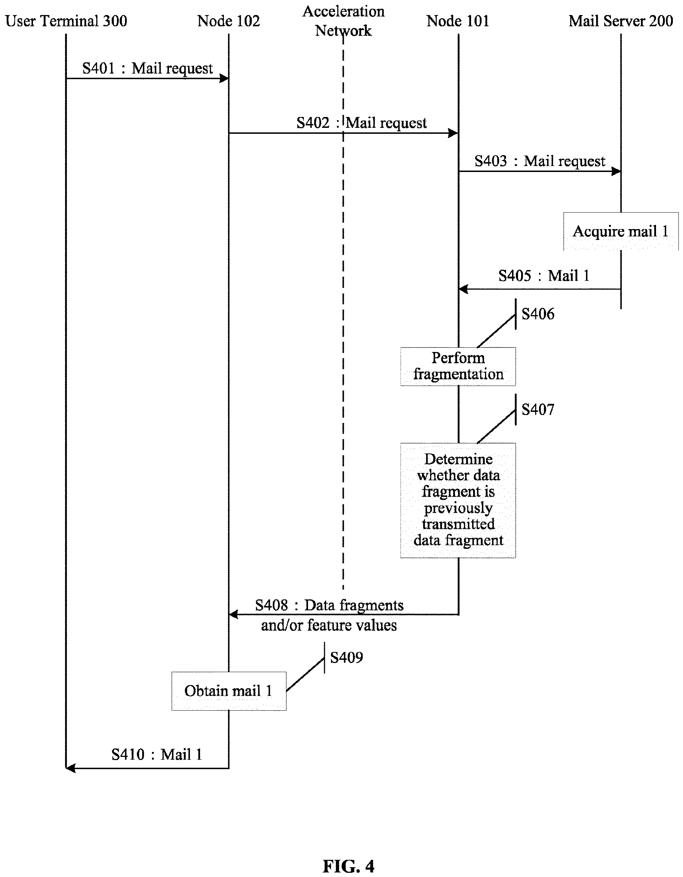

Taking the user terminal 300 as an example, in the process of sending the mail 1 to the user terminal 300 by the mail server 200, the mail server 200 is the transmitting terminal, while the user terminal 300 is the receiving terminal. Therefore, the node 101 is the first node, and the node 102 is the second node. FIG. 4 is a schematic diagram of a mail transmission process according to some embodiments of the present disclosure. As shown in FIG. 4, the method mainly includes the following steps:
S401: the user terminal 300 sends a mail request to the node 102.

The mail request includes an identifier for the mail 1.

S402: the node 102 sends the mail request to the node 101 through the acceleration network.

S403: the node 101 forwards the mail request to the mail server.

S404: the mail server acquires the mail 1 according to the identifier of the mail 1.

S405: the mail server transmits the mail 1 to the node 101.

S406: the node 101 performs a fragmentation process on the mail 1.

S407: the node 101 determines, according to the historically transmitted mail data, whether a data fragment is a data fragment that has been previously transmitted.

S408: the node 101 transmits data fragments and/or feature values of data fragments to the node 102 through the acceleration network.

S409: the node 102 obtains the mail 1 according to the data fragments and/or the feature values of the data fragments.

S410: the node 102 transmits the mail 1 to the user terminal 300.

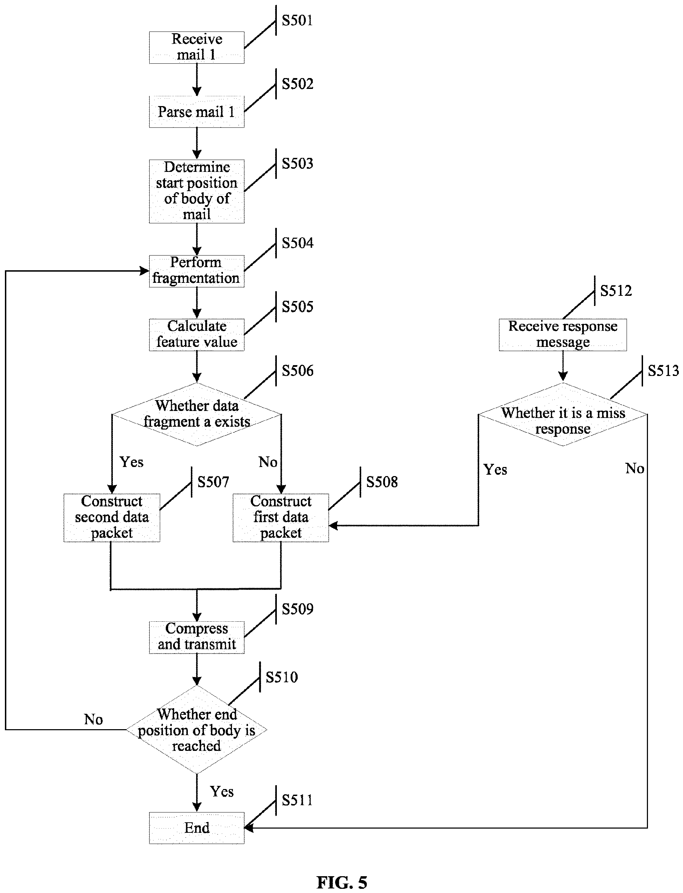

In the process shown in FIG. 4, the node 101 serves as the first node and specifically implements a process shown in FIG. 5. FIG. 5 is a schematic diagram of a practical mail transmission process by the first node according to some embodiments of the present disclosure, which corresponds to S406-S408 in FIG. 4, and specifically includes the following steps:
S501: receive the mail 1.

S502: parse the mail 1.

The parsing of the mail 1 mainly includes identifying the start position and the end position of the body of the mail 1.

S503: determine the start position of the body of the mail 1.

S504: perform a fragmentation process on the body of the mail 1 to obtain a data fragment a.

Here, the data fragment a does not specifically refer to a specific data fragment, but rather refers to a data fragment latest obtained when the mail 1 is fragmented.

S505: calculate a feature value of the data fragment a.

S506: query the local cache according to the feature value of the data fragment a. When the data fragment a exists in the local cache, proceed to S507. When the data fragment a does not exist in the local cache, proceed to S508.

S507: construct a second data packet.

The second data packet includes the feature value of the data fragment a and the fragment serial number of the data fragment a.

S508: construct a first data packet.

The first data packet includes the data fragment a, the feature value of the data fragment a, and the fragment serial number of the data fragment a.

S509: compress a data stream formed by the first data packet and/or the second data packet, and transmit the data stream.

S510: determine whether the fragmentation process reaches the end position of the body of the mail 1; if the fragmentation process reaches the end position of the body of the mail 1, proceed to S511; if the fragmentation process has not reached the end position of the body of the mail 1, return to S504, and continue to perform the fragmentation process on data that has not been fragmented.

S511: end.

S512: receive a response message returned by the node 102.

S513: determine whether the received response message is a miss response; if the received response message is a miss response, proceed to S508; if the received response message is not a miss response, proceed to S511.

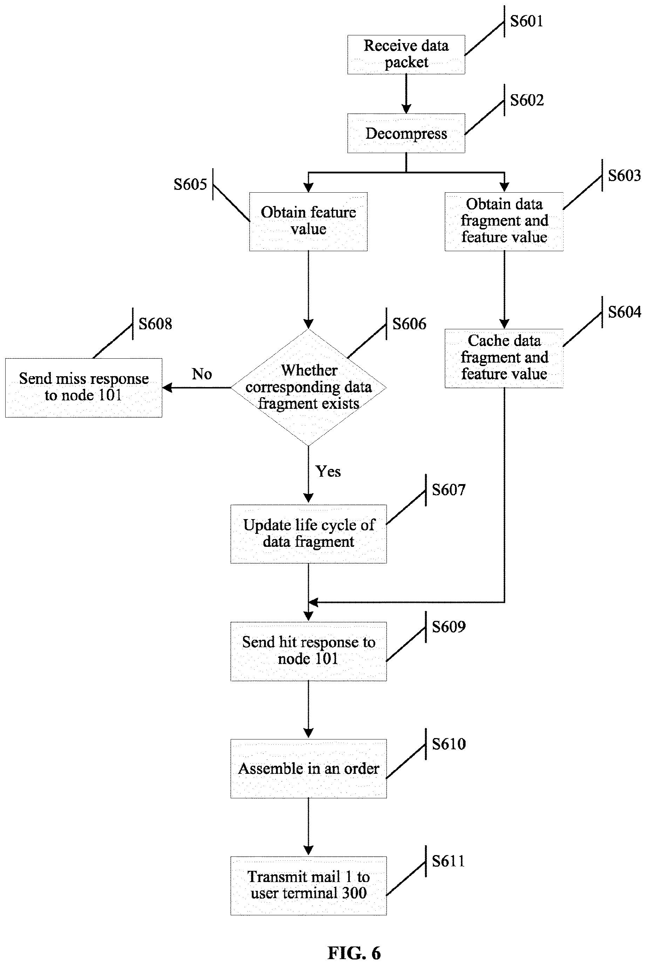

In the process shown in FIG. 4, the node 102 serves as the second node and specifically implements a process shown in FIG. 6. FIG. 6 is a schematic diagram of a practical mail transmission process by the second node according to some embodiments of the present disclosure, which corresponds to S409-S410 in FIG. 4, and specifically includes the following steps:
S601: receive a data packet.

S602: decompress the data packet.

S603: acquire the data fragment and the feature value of the data fragment in the data packet when the data packet is a first data packet.

S604: cache the data fragment and the feature value of the data fragment.

S605: acquire the feature value in the data packet when the data packet is a second data packet.

S606: query the local cache according to the feature value. When the corresponding data fragment exists in the local cache, proceed to S607. When the corresponding data fragment does not exist in the local cache, proceed to S608.

S607: update the life cycle of the data fragment in the local cache.

S608: send a miss response to the node 101.

S609: send a hit response to the node 101.

S610: combine the data fragments according to the fragment serial numbers, to obtain the mail 1.

S611: transmit the mail 1 to the user terminal 300.

Through the processes shown in FIGs 4, 5, and 6, the mail 1 is received by the user terminal 300. Assume that the mail 1 is simultaneously sent to the user terminal 400 as a group mail. When the user terminal 300 receives the mail 1, the node 102 has cached all the data fragments of the mail 1. Then, when the node 101 transmits the mail 1 to the node 102, all the data fragments in the mail 1 are the data fragments that have been previously transmitted, so the node 101 only needs to transmit the feature values and the fragment serial numbers of the data fragments to the node 102. The node 102 may acquire the data fragments from the local cache of the node 102 according to the feature values of the data fragments, combine the data fragments into the mail 1 according to the fragment serial numbers, and then transmit the mail 1 to the user terminal 400.

Situation 2: the user terminal 300 forwards a mail to the user terminal 400.

Assume that the user terminal 300 has edited the mail 1 and generated a mail 2. The user terminal 300 needs to upload the mail 2 directly or indirectly to the mail server 200. The user terminal 400 then directly or indirectly sends a mail request to the mail server 200, to allow the mail server 200 to directly or indirectly transmit the mail 2 to the user terminal 400.

In the mail transmission system shown in FIG. 3, in the process in which the user terminal 300 uploads the mail 2 to the mail server 200, the user terminal 300 is the transmitting terminal, and the mail server 200 is the receiving terminal, so the node 102 is the first node, while the node 101 is the second node.

After receiving the mail 2 transmitted by the user terminal 300, the node 102 also performs a fragmentation process on the mail 2, and determines whether each data fragment is a data fragment that has been previously transmitted. Since the mail 2 is edited on the basis of the mail 1, most of the data fragments of the mail 2 are data fragments that have been previously transmitted, and only partial of the data fragments of the mail 2 are data fragments that have not been previously transmitted. For different data fragments, the node 102 adopts a processing procedure similar to FIG. 5, details of which will not be repeated in the embodiments of the present disclosure. Similarly, the node 101 also may adopt a process similar to FIG. 6 for the received data packets, details of which will also not be repeated in the embodiments of the present disclosure.

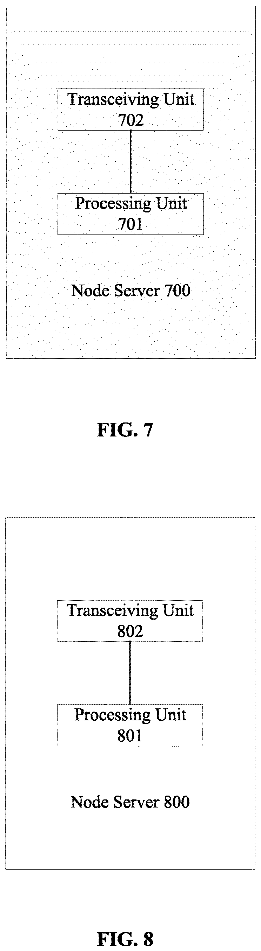

Based on the similar technical concept, the embodiments of the present disclosure further provide a node server, where the node server is applied to a mail transmission system including a first node and a second node, where the first node is configured to receive mail data transmitted by a transmitting terminal, and the second node is configured to transmit the mail data to a receiving terminal. The node server is coupled to the first node, and may implement a mail transmission method provided by any of the foregoing embodiments. FIG. 7 is a schematic structural diagram of a node server according to some embodiments of the present disclosure. As shown in FIG. 7, the node server 700 includes: a processing unit 701 and a transceiving unit 702.

The processing unit 701 is configured to perform a fragmentation process on the mail data to obtain a plurality of data fragments. For each data fragment, the processing unit: determines, based on historically transmitted mail data, whether the data fragment is a data fragment that has been previously transmitted; when the data fragment is a data fragment that has not been previously transmitted, transmits the data fragment to the second node by using the transceiving unit 702; and when the data fragment is a data fragment that has been previously transmitted, transmits a feature value of the data fragment to the second node by using the transceiving unit 702, where the feature value is used to instruct the second node to acquire the data fragment.

Optionally, the processing unit 701 is further configured to:
cache the data fragment and the feature value of the data fragment in the local cache of the first node; and
the processing unit 701 is specifically configured to:
obtain the feature value of the data fragment;
query the local cache of the first node according to the feature value of the data fragment;
when the feature value of the data fragment exists in the local cache, determine that the data fragment is a data fragment that has been previously transmitted; and
when the feature value of the data fragment does not exist in the local cache, determine that the data fragment is a data fragment that has not been previously transmitted.

Optionally, the processing unit 701 is further configured to:
parse the mail data and determine body data of the mail data; and
the processing unit 701 is specifically configured to:
perform a fragmentation process on the body data of the mail data.

Optionally, the transceiving unit 702 is further configured to:
receive a miss response sent by the second node, where the miss response is sent when the second node does not obtain the data fragment corresponding to the feature value from the local cache of the second node, and the miss response includes the feature value; and
the processing unit 701 is further configured to:
determine a data fragment corresponding to the feature value according to the feature value in the miss response, and transmit the data fragment corresponding to the feature value to the second node by using the transceiving unit 702.

Optionally, the processing unit 701 is specifically configured to:
transmit, by using the transceiving unit 702, a first data packet to the second node, where the first data packet includes the data fragment, the feature value of the data fragment, and the fragment serial number of the data fragment, where the fragment serial number is used to denote a sequential number of the data fragment corresponding to the fragment serial number in the mail data; and
transmit, by using the transceiving unit 702, a second data packet to the second node, where the second data packet includes the feature value of the data fragment and the fragment serial number of the data fragment.

Based on the similar technical concept, the embodiments of the present disclosure further provide another node server, where the node server is applied to a mail transmission system including a first node and a second node, where the first node is configured to receive mail data transmitted by a transmitting terminal, and the second node is configured to transmit the mail data to a receiving terminal. The node server is coupled to the second node, and may implement a mail transmission method provided by any of the foregoing embodiments. FIG. 8 is a schematic structural diagram of a node server according to some embodiments of the present disclosure. As shown in FIG. 8, the node server 800 includes: a processing unit 801 and a transceiving unit 802.

The transceiving unit 802 is configured to receive a data fragment of the mail data transmitted by the first node; where the data fragment is transmitted after the first node performs a fragmentation process on the mail data and when it is determined, based on historically transmitted mail data, that the data fragment is a data fragment that has not been previously transmitted; and/or
receive a feature value of the data fragment of the mail data transmitted by the first node, where the feature value is transmitted after the first node performs the fragmentation process on the mail data and when it is determined, based on the historically transmitted mail data, that the data fragment is a data fragment that has been previously transmitted; and
the processing unit 801 is configured to generate the mail data based on each received data fragment and/or each received feature value, and transmit the generated mail data to the receiving terminal through the transceiving unit 802.

Optionally, the transceiving unit 802 is specifically configured to:
receive a first data packet transmitted by the first node, where the first data packet includes the data fragment and the feature value of the data fragment;
the processing unit 801 is specifically configured to:
store the data fragment and the feature value of the data fragment into a local cache of the second node; and
the processing unit 801 is further configured to:
query the local cache of the second node according to the feature value; and when the data fragment corresponding to the feature value exists in the local cache of the second node, acquire the data fragment.

Optionally, the processing unit 801 is further configured to:
when the data fragment corresponding to the feature value does not exist in the local cache of the second node, send a miss response to the first node, where the miss response includes the feature value, and the miss response is used to instruct the first node to transmit the feature value and the data fragment.

Optionally, the transceiving unit 802 is specifically configured to:
receive a second data packet transmitted by the first node, where the second data packet includes the feature value of the data fragment and a fragment serial number of the data fragment, the fragment serial number is used to denote a sequential number of the data fragment corresponding to the fragment serial number in the mail data, and the first data packet also includes the fragment serial number of the data fragment; and
the processing unit 801 is specifically configured to:
acquire each data fragment according to first data packets and/or second data packets, and combine each data fragment into the mail data according to fragment serial numbers.

Based on the similar technical concept, the embodiments of the present disclosure further provide a mail transmission system. The mail transmission system includes a node server provided by any of the foregoing embodiments, and may implement a mail transmission method provided by any of the foregoing embodiments.

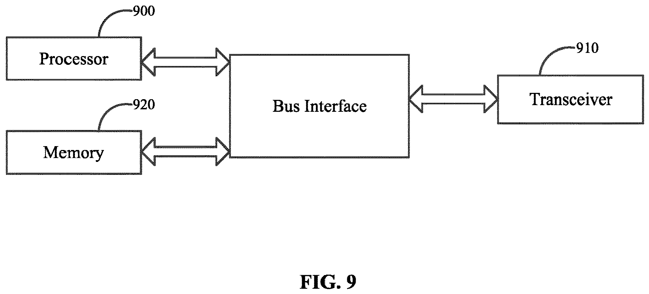

Based on the similar technical concept, the embodiments of the present disclosure provide a computing device. The computing device is a node server. FIG. 9 is a schematic structural diagram of a node server according to some embodiments of the present disclosure. The node server in FIG. 9 includes a processor 900 for reading programs stored in a memory 920 and implementing a mail transmission method provided by any of the foregoing embodiments.

In FIG. 9, the bus interface may include any number of interconnected buses and bridges, specifically linked by one or more processors represented by the processor 900 and various circuits of memory(ies) represented by the memory 920. The bus interface may also link various other circuits such as peripherals, voltage regulators, and power management circuits, as is well known in the art, and therefore, will not be further described herein. The bus interface provides interfaces. The transceiver 910 may include a plurality of components, such as a transmitter and a receiver, that provide means for communicating with various other devices on a transmission medium.

The processor 900 is responsible for managing the bus interface and the general processing, and the memory 920 may store data used by the processor 900 when performing operations.

Optionally, the processor 900 may be a CPU (Central Processing Unit), an ASIC (Application Specific Integrated Circuit), an FPGA (Field-Programmable Gate Array), or a CPLD (Complex Programmable Logic Device), etc.

Based on the similar technical concept, the embodiments of the present disclosure further provide a non-transitory computer-readable storage medium. The non-transitory computer-readable storage medium stores computer-executable instructions that are configured to cause a computing device to implement a mail transmission method in any of the foregoing embodiments.

The non-transitory computer-readable storage medium may be any available medium or data storage device accessible by a computer, including but not limited to magnetic storage (e.g., floppy disk, hard disk, magnetic tape, magneto-optical disk (MO), etc.), optical storage (e.g., CD, DVD, BD, HVD, etc.), and semiconductor memory (e.g., ROM, EPROM, EEPROM, NAND FLASH, SSD. etc.).

Although the preferred embodiments of the present disclosure have been described, once understanding the basic creative concept, a person skilled in the art may make other modifications and alterations to these embodiments.

## Claims

1. A mail transmission method for application in a mail transmission system including a first node and a second node, wherein the first node is configured to receive mail data transmitted by a transmitting terminal, and the second node is configured to transmit the mail data to a receiving terminal, the method comprising:
performing (S201), by the first node, a fragmentation process on the mail data to obtain a plurality of data fragments; and
for each data fragment,
based on historically transmitted mail data, determining (S202), by the first node, whether the data fragment is a data fragment that has been previously transmitted,
when the data fragment is a data fragment that has not been previously transmitted, transmitting, by the first node, the data fragment and a fragment serial number of the data fragment to the second node, the fragment serial number being used to denote a sequential number of a data fragment corresponding to the fragment serial number in the mail data; and
when the data fragment is a data fragment that has been previously transmitted, transmitting, by the first node, a feature value of the data fragment and the fragment serial number of the data fragment to the second node, wherein the feature value is used to instruct the second node to acquire the data fragment and the feature value is calculated according to the data fragment by using a predefined feature value algorithm.

2. The method according to claim 1, when the data fragment is a data fragment that has not been previously transmitted, the method further includes:
caching, by the first node, the data fragment and the feature value of the data fragment in a local cache of the first node; and
wherein determining, by the first node, based on the historically transmitted mail data, whether the data fragment is a data fragment that has been previously transmitted further includes:
acquiring the feature value of the data fragment,
querying the local cache of the first node according to the feature value of the data fragment,
when the feature value of the data fragment exists in the local cache of the first node, determining that the data fragment is a data fragment that has been previously transmitted, and
when the feature value of the data fragment does not exist in the local cache of the first node, determining that the data fragment is a data fragment that has not been previously transmitted.

3. The method according to claim 1, before performing, by the first node, the fragmentation process on the mail data, the method further includes:
parsing the mail data to determine body data of the mail data; and
wherein performing the fragmentation process on the mail data further includes:
performing the fragmentation process on the body data of the mail data.

4. The method according to any one of claims 1-3, wherein:
transmitting the data fragment to the second node further includes:
transmitting a first data packet to the second node, wherein the first data packet includes the data fragment, the feature value of the data fragment, and the fragment serial number of the data fragment; and
transmitting the feature value of the data fragment to the second node further includes:
transmitting a second data packet to the second node, wherein the second data packet includes the feature value of the data fragment and the fragment serial number of the data fragment.

5. A mail transmission method for application in a mail transmission system including a first node and a second node, wherein the first node is configured to receive mail data transmitted by a transmitting terminal, and the second node is configured to transmit the mail data to a receiving terminal, the method comprising:
receiving (S203), by the second node, a data fragment of the mail data and a fragment serial number of the data fragment transmitted by the first node, wherein the data fragment is transmitted after the first node performs a fragmentation process on the mail data and when it is determined, based on historically transmitted mail data, that the data fragment is a data fragment that has not been previously transmitted, the fragment serial number being used to denote a sequential number of a data fragment corresponding to the fragment serial number in the mail data; and/or
receiving (203), by the second node, a feature value of the data fragment of the mail data and the fragment serial number of the data fragment transmitted by the first node, wherein the feature value is transmitted after the first node performs the fragmentation process on the mail data and when it is determined, based on the historically transmitted mail data, that the data fragment is a data fragment that has been previously transmitted; wherein the feature value is used to instruct the second node to acquire the data fragment and the feature value is calculated according to the data fragment by using a predefined feature value algorithm;
generating (S204), by the second node, the mail data based on each received data fragment and/or each received feature value; and
transmitting (S205), by the second node, the generated mail data to the receiving terminal.

6. The method according to claim 5, wherein receiving, by the second node, the data fragment of the mail data transmitted by the first node further includes:
receiving, by the second node, a first data packet transmitted by the first node, wherein the first data packet includes the data fragment and the feature value of the data fragment;
storing, by the second node, the data fragment and the feature value of the data fragment in a local cache of the second node; and
after receiving, by the second node, the feature value of the data fragment of the mail data transmitted by the first node, the method further includes:
querying, by the second node, the local cache of the second node based on the feature value, and
when a data fragment corresponding to the feature value exists in the local cache of the second node, acquiring, by the second node, the data fragment corresponding to the feature value.

7. The method according to claim 6, further comprising:
when the data fragment corresponding to the feature value does not exist in the local cache of the second node, sending, by the second node, a miss response to the first node, wherein the miss response includes the feature value, and the miss response is used to instruct the first node to transmit the feature value and the data fragment corresponding to the feature value to the second node.

8. The method according to any one of claims 5-7, wherein receiving, by the second node, the feature value of the data fragment of the mail data transmitted by the first node further includes:
receiving, by the second node, a second data packet transmitted by the first node, wherein the second data packet includes the feature value of the data fragment and the fragment serial number of the data fragment, and the fragment serial number of the data fragment being also included in the first data packet; and
wherein generating, by the second node, the mail data based on each received data fragment and/or each received feature value further includes:
acquiring, by the second node, each data fragment based on first data packets and/or second data packets, and
combining, by the second node, each data fragment into the mail data based on fragment serial numbers.

9. A node server (700, 800) for application in a mail transmission system including a first node and a second node, wherein the first node is configured to receive mail data transmitted by a transmitting terminal, the second node is configured to transmit the mail data to a receiving terminal, the node server is the first node, and the node server includes a processing unit (701, 801) and a transceiving unit (702, 802), wherein:
the processing unit (701, 801) is configured to perform a fragmentation process on the mail data to obtain a plurality of data fragments, and for each data fragment: determine, based on historically transmitted mail data, whether the data fragment is a data fragment that has been previously transmitted, when the data fragment is a data fragment that has not been previously transmitted, transmit, through the transceiving unit (702, 802), the data fragment and a fragment serial number of the data fragment to the second node, the fragment serial number being used to denote a sequential number of a data fragment corresponding to the fragment serial number in the mail data and when the data fragment is a data fragment that has been previously transmitted, transmit, through the transceiving unit, a feature value of the data fragment and the fragment serial number of the data fragment to the second node, wherein the feature value is used to instruct the second node to acquire the data fragment and the feature value is calculated according to the data fragment by using a predefined feature value algorithm.

10. The node server according to claim 9, wherein the processing unit is further
configured to:
cache the data fragment and the feature value of the data fragment in a local cache of the first node; and
the processing unit is configured to:
acquire the feature value of the data fragment,
query the local cache of the first node according to the feature value of the data fragment,
when the feature value of the data fragment exists in the local cache of the first node, determine that the data fragment is a data fragment that has been previously transmitted, and
when the feature value of the data fragment does not exist in the local cache of the first node, determine that the data fragment is a data fragment that has not been previously transmitted.

11. The node server according to claim 10, wherein the processing unit is further configured to:
parse the mail data to determine body data of the mail data; and
the processing unit is configured to:
perform the fragmentation process on the body data of the mail data.

12. The node server according to any one of claims 9-11, wherein the processing unit is further configured to:
transmit, through the transceiving unit, a first data packet to the second node, wherein the first data packet includes the data fragment, the feature value of the data fragment, and the fragment serial number of the data fragment; and
transmit, through the transceiving unit, a second data packet to the second node, wherein the second data packet includes the feature value of the data fragment and the fragment serial number of the data fragment.

13. A node server (700, 800) for application in a mail transmission system including a first node and a second node, wherein the first node is configured to receive mail data transmitted by a transmitting terminal, the second node is configured to transmit the mail data to a receiving terminal, the node server is the second node, and the node server includes a processing unit and a transceiving unit, wherein:
the transceiving unit (702, 802) is configured to receive a data fragment of the mail data and a fragment serial number of the data fragment transmitted by the first node, wherein the data fragment is transmitted after the first node performs a fragmentation process on the mail data and when it is determined, based on historically transmitted mail data, that the data fragment is a data fragment that has not been previously transmitted, the fragment serial number being used to denote a sequential number of a data fragment corresponding to the fragment serial number in the mail data; and/or
receive a feature value of the data fragment of the mail data and the fragment serial number transmitted by the first node, wherein the feature value is transmitted after the first node performs the fragmentation process on the mail data and when it is determined, based on the historically transmitted mail data, that the data fragment is a data fragment that has been previously transmitted; wherein the feature value is used to instruct the second node to acquire the data fragment and the feature value is calculated according to the data fragment by using a predefined feature value algorithm; and
the processing unit is configured to generate the mail data based on each received data fragment and/or each received feature value, and transmit, through the transceiving unit, the generated mail data to the receiving terminal.

14. The node server according to claim 13, wherein:
the transceiving unit (702, 802) is configured to receive a first data packet transmitted by the first node, wherein the first data packet includes the data fragment and the feature value of the data fragment;
the processing unit is configured to store the data fragment and the feature value of the data fragment in a local cache of the second node; and
the processing unit is further configured to query the local cache of the second node based on the feature value, and when a data fragment corresponding to the feature value exists in the local cache of the second node, acquire the data fragment corresponding to the feature value.

15. The node server according to any one of claims 13-14, wherein:
the transceiving unit (702, 802) is further configured to:
receive a second data packet transmitted by the first node, wherein the second data packet includes the feature value of the data fragment and the fragment serial number of the data fragment, and the fragment serial number of the data fragment being also included in the first data packet; and
the processing unit is further configured to:
acquire each data fragment based on first data packets and/or second data packets, and combine each data fragment into the mail data based on fragment serial numbers.

## Patentansprüche

1. Eine E-Mail-Übertragungsmethode für die Anwendung in einem E-Mail-Übertragungssystem, das einen ersten und zweiten Knoten einschliesst, wobei der erste Knoten für den Empfang von durch ein Übertragungsterminal übermittelte E-Mail-Daten konfiguriert ist, und der zweite Knoten für die Übertragung der E-Mail-Daten an ein Empfangsterminal konfiguriert ist, wobei die Methode Folgendes umfasst:
Ausführung (S201) durch den ersten Knoten eines Fraagmentierungsprozesses der E-Mail-Daten, um eine Vielzahl von Datenfragmenten zu erhalten; und
für jedes Datenfragment
basierend auf den historisch übermittelten E-Mail-Daten, Bestimmung (S202) durch den ersten Knoten,
ob das Datenfragment ein Datenfragment ist, das früher übermittelt wurde; wenn das Datenfragment ein Datenfragment ist, das früher nicht übermittelt wurde,
Übertragung durch den ersten Knoten des Datenfragments und einer Fragmentseriennummer des Datenfragments an den zweiten Knoten, wobei die Fragmentseriennummer benutzt wird, um eine laufende Nummer eines der Fragmentseriennummer in den E-Mail-Daten entsprechenden Datenfragments zu bezeichnen; und
wenn das Datenfragment ein Datenfragment ist, das früher übermittelt wurde,
Übertragung durch den ersten Knoten eines Merkmalwertes des Datenfragments und der Fragmentseriennummer des Datenfragments an den zweiten Knoten, wobei der Fragmentmerkmalwert benutzt wird, um dem zweiten Knoten Anweisung zu geben, das Datenfragment zu erhalten, und der Merkmalwert wird übereinstimmend mit dem Datenfragment berechnet, indem ein vorbestimmter Algorithmus des Merkmalwertes benutzt wird.

2. Die Methode gemäss Anspruch 1, wobei, wenn das Datenfragment ein Datenfragment ist, das nicht früher übermittelt wurde, die Methode weiter Folgendes einschliesst:
Cache-Speicherung durch den ersten Knoten des Datenfragments und des Merkmalwertes des Datenfragments in einem lokalen Cache-Speicher des ersten Knotens; und
wobei die Bestimmung durch den ersten Knoten, basierend auf den historisch übermittelten E-Mail-Daten, ob das Datenfragment ein Datenfragment ist, das früher übermittelt wurde, weiter Folgendes einschliesst:
Erhalt des Merkmalwertes des Datenfragments,
Abfrage des lokalen Cache-Speichers des ersten Knotens übereinstimmend mit dem Merkmalwert des Datenfragments,
wenn der Merkmalwert des Datenfragments im lokalen Cache-Speicher des ersten Knotens vorhanden ist,
Bestimmung, dass das Datenfragment ein Datenfragment ist, das früher übermittelt wurde, und
wenn der Merkmalwert des Datenfragments nicht im lokalen Cache-Seicher des ersten Knotens vorhanden ist, Bestimmung, dass das Datenfragment ein Datenfragment ist, das früher nicht übermittelt wurde.

3. Die Methode gemäss Anspruch1, Methode, die vor der Ausführung des Framentierungsprozesses der E-Mail-Daten durch den ersten Knoten weiter Folgendes einschliesst:
Parsing der E-Mail-Daten zwecks Ermittlung der Body-Daten der E-Mail-Daten, und
wobei die Ausführung des Fragmentierungsprozesses der E-Mail-Daten weiter Folgendes einschliesst:
Ausführung des Fragmentierungsprozesses an den Body-Daten der E-Mail-Daten.

4. Die Methode gemäss irgendeinem der Ansprüche 1-3, bei der
die Übertragung des Datenfragments an den zweiten Knoten weiter Folgendes einschliesst:
Übertragung des ersten Datenpakets an den zweiten Knoten, wobei das erste Datenpaket Folgendes einschliesst:
Das Datenfragment, den Merkmalwert des Datenfragments und die Fragmentseriennummer des Datenfragments; und
die Übertragung des Merkmalwertes des Datenfragments an den zweiten Knoten Folgendes einschliesst:
Übertragung eines zweiten Datenpakets an den zweiten Knoten, wobei das zweite Datenpacket
den Merkmalwert des Datenfragments und die Fragmentseriennummer des Datenfragments einschliesst.

5. Eine E-Mail-Übertragungsmethode für die Anwendung in einem E-Mail-Übertragungssystem, die einen ersten Knoten und einen zweiten Knoten einschliesst, wobei der erste Knoten konfiguriert ist, um durch ein Übertragungsterminal übermittelte E-Mail-Daten zu empfangen, und der zweite Knoten konfiguriert ist, um die E-Mail-Daten an ein Empfangsterminal zu übermitteln, wobei die Methode Folgendes umfasst:
Empfang (S203) eines Datenfragments der E-Mail-Daten durch den zweiten Knoten und eine Fragmentseriennummer des durch den ersten Knoten übermittelten Datenfragments, wobei das Datenfragment übermittelt wird, nachdem der erste Knoten einen Fragmentierungsprozess der E-Mail-Daten ausgeführt hat, und wenn basierend auf den historisch übermittelten E-Mail-Daten bestimmt wird, dass das Datenfragment ein Datenfragment ist, das nicht schon vorher übermittelt wurde, wird die Fragmentseriennummer verwendet, um eine sequentielle Nummer eines der Fragmentseriennummer in den E-Mail-Daten entsprechenden Datenfragments zu bezeichnen; und/oder
Empfang (203) eines Merkmalwertes des Datenfragments der E-Mail-Daten durch den zweiten Knoten und der Fragmentseriennummer des durch den ersten Knoten übermittelten Datenfragments, wobei der Merkmalwert übermittelt wird, nachdem der erste Knoten den Fragmentierungsprozess der E-Mail-Daten durchgeführt hat, und wenn basierend auf den historisch übermittelten E-Mail-Daten bestimmt wird, dass das Datenfragment ein Datenfragment ist, das vorher schon übermittelt wurde; wobei der Merkmalwert benutzt wird um dem zweiten Knoten die Anweisung zu geben, dass er das Datenfragment erwirbt, und der Merkmalwert wird übereinstimmend mit dem Datenfragment unter Nutzung eines vordefinierten Werkmalwertalgorithmuses berechnet;
Erzeugung (S204) durch den zweiten Knoten der E-Mail-Daten basierend auf jedem empfangenen Datenfragment und/oder jedem empfangenen Merkmalwert; und
Übertragung (S205) der erzeugten E-Mail-Daten an das Empfangsterminal durch den zweiten Knoten.

6. Die Methode gemäss Anspruch 5, bei der der Empfang durch den zweiten Knoten des Datenfragments der über den ersten Knoten übermittelten E-Mail-Daten weiter Folgendes einschliesst:
Empfang durch den zweiten Knoten eines ersten durch den ersten Knoten übermittelten Datenpakets, wobei das erste Datenpaket das Datenfragment und den Merkmalwert des Datenfragments einschliesst;
Speichern durch den zweiten Knoten des Datenfragments und des Merkmalwertes des Datenfragments in einem lokalen Cache-Speicher des zweiten Knotens; und
nach Empfang durch den zweiten Knoten des Merkmalwertes des Datenfragments der durch den ersten Knoten übermittelten E-Mail-Daten, schliesst die Methode weiter Folgendes ein:
Abfrage durch den zweiten Knoten des Cache-Speichers des zweiten Knotens basierend auf dem Merkmalwert, und
wenn ein dem Merkmalwert entsprechendes Datenfragment im lokalen Cache-Speicher des zweiten Knotens vorhanden ist, Erhalt durch den zweiten Knoten des dem Merkmalwert entsprechenden Datenfragments.

7. Die Methode gemäss Anspruch 6, die weiter Folgendes umfasst:
Wenn das dem Merkmalwert entsprechende Datenfragment nicht im lokalen Cache-Speicher des zweiten Knotens vorhanden ist, Senden durch den zweiten Knoten einer Fehlantwort an den ersten Knoten, wobei die Fehlantwort den Merkmalwert einschliesst, und benutzt wird um dem ersten Knoten Anweisung zu geben, den Merkmalwert und das dem Merkmalwert entsprechende Datenfragment an den zweiten Knoten zu übermitteln.

8. Die Methode gemäss irgendeinem der Ansprüche 5-7, bei der der Empfang durch den zweiten Knoten des Merkmalwertes des Datenfragments der durch den ersten Knoten übermittelten E-Mail-Daten weiter Folgendes einschliesst:
Empfang durch den zweiten Knoten eines zweiten durch den ersten Knoten übermittelten Datenpakets, wobei das zweite Datenpakekt den Merkmalwert des Datenfragments und die Fragmentseriennummern des Datenfragments einschliesst, und die Fragmentseriennummer des Datenfragments auch im ersten Datenpaket eingeschlossen ist; und
wobei die Erzeugung durch den zweiten Knoten der E-Mail-Daten, basierend auf jedem empfangenen Datenfragment, und/oder jedem empfangenen Merkmalwert weiter Folgendes einschliesst:
Erwerb durch den zweiten Knoten eines jeden Datenfragments basierend auf ersten Datenpaketen und/oder zweiten Datenpaketen, und
Kombinieren durch den zweiten Konten eines jeden Datenfragments mit den E-Mail-Daten basierend auf Framentseriennummern.

9. Ein Kontenserver (700, 800) für die Anwendung in einem E-Mail-Übertragungssystem, der einen ersten Knoten und einen zweiten Knoten einschliesst, wobei der erste Knoten konfiguriert ist, um durch ein Übertragungsterminal übermittelte E-Mail-Daten zu empfangen, der zweite Knoten konfiguriert ist, um die E-Mail-Daten an ein Empfangsterminal zu übermitteln, der Knotenserver der erste Knoten ist und der Knotenserver eine Verarbeitungseinheit (701, 801) und eine Sende/Empfangseinheit (702, 802) einschliesst, wobei:
Die Verarbeitungseinheit (701, 801) konfiguriert ist, um ein Fragmentierungsprocess der E-Mail-Daten durchzuführen, um eine Mehrzahl an Datenfragmenten zu erhalten, und für jedes Datenfragment:
basierend auf historisch übermittelten E-Mail-Daten zu bestimmen, ob das Datenfragment ein Datenfragment ist, das schon vorher übermittelt wurde, wenn das Datenfragment ein Datenfragment ist, das nicht vorher übermittelt wurde, Übertragung durch die Sende/Empfangseinheit (702, 802) des Datenfragments und einer Fragmentseriennummer des Datenfragments an den zweiten Knoten, wobei die Fragmentseriennummer benutzt wird, um eine sequentielle Nummer des der Fragmentseriennummer des den E-Mail-Daten entsprechenden Datenfragments zu bezeichnen, und wenn das Datenfragment ein Datenfragment ist, das vorher übermittelt wurde, Übertragung durch die Sende/Empfangseinheit eines Merkmalwerts des Datenfragments und der Fragmentseriennummer des Datenfragments an den zweiten Knoten, wobei der Merkmalwert benutzt wird, um dem zweiten Knoten Anweisung zu geben, das Datenfragment zu erwerben, und der Merkmalwert übereinstimmend mit dem Datenfragment unter Benutzung eines vordefinierten Merkmalwertalgorithmus zu berechnen.

10. Der Knotenserver gemäss Anspruch 9, bei dem die Verarbeitungseinheit weiter konfiguriert ist, um:
Das Datenfragment und den Merkmalwert des Datenfragments in einem lokalen Cache-Speicher des ersten Knotens zwischenzuspeichern; und
die Verarbeitungseinheit konfiguriert ist um:
den Merkmalwert des Datenfragments zu erwerben,
den lokalen Cache-Speicher des ersten Knotens übereinstimmend mit dem Merkmalwert des Datenfragments abzufragen,
wenn der Merkmalwert des Datenfragments im lokalen Cache-Speicher des ersten Knotens vorhanden ist,
Bestimmung, dass das Datenfragment ein Datenfragment ist, das vorher übermittelt wurde, und
wenn der Merkmalwert des Datenfragments nicht im lokalen Cache-Speicher des ersten Knotens vorhanden ist, Bestimmung, dass das Datenfragment ein Datenfragment ist, dass nicht vorher übermittelt wurde.

11. Der Knotenserver gemäss Anspruch 10, bei dem die Verarbeitungseinheit weiter konfiguriert ist um:
Die E-Mail-Daten syntaktisch zu analysieren, um Body-Daten der E-Mail-Daten zu bestimmen; und
die Verarbeitungseinheit konfiguriert ist, um:
den Fragmentierungsprozess der Body-Daten der E-Mail-Daten durchzuführen.

12. Der Knotenserver gemäss irgendeinem der Ansprüche 9-11, bei dem die Verarbeitungseinheit weiter konfiguriert ist, um:
Über die Sende/Empfangseinheit ein erstes Datenpaket an den zweiten Knoten zu übermitteln, wobei das erste Datenpaket das Datenfragment, den Merkmalwert des Datenfragments und die Fragmentseriennummer des Datenfragments einschliesst; und
über die Sende/Empfangseinheit ein zweites Datenpaket an den zweiten Knoten zu übermitteln, wobei das zweite Datenpaket den Merkmalwert des Datenfragments und die Fragmentseriennummer des Datenfragments einschliesst.

13. Ein Knotenserver (700, 800) für die Anwendung in einem E-Mail-Übertragungssystem, der einen ersten Knoten und einen zweiten Knoten einschliesst, wobei der erste Knoten konfiguriert ist, um durch ein Übertragungsterminal übermittelte E-Mail-Daten zu empfangen, der zweite Knoten konfiguriert ist, um die E-Mail-Daten an ein Empfangsterminal zu übermitteln, der Knotenserver der zweite Knoten ist und der Knotenserver eine Verarbeitungseinheit und eine Sende/Empfangseinheit einschliesst, wobei:
Die Send/Empfangseinheit (702, 802) konfiguriert ist, um ein Datenfragment der E-Mail-Daten und eine Fragmentseriennummer des durch den ersten Knoten übermittelten Datengraments zu erhalten, wobei das Datenfragment übermittelt wird, nachdem der erste Knoten den Fragmentierungsprozess der E-MMail-Daten durchgeführt hat, und, wenn basierend auf den historisch übermittelten E-Mail-Daten bestimmt wird, dass das Datenfragment ein Datenfragment ist, das nicht vorher übermittelt wurde, wird die Datenseriennummer benutzt, um eine sequentielle Nummer eines der Fragmentseriennummer entsprechenden Datenfragments in den E-Mail-Daten zu bezeichnen; und/oder
einen Merkmalwert des Datenfragment der E-Mail-Daten und die durch den ersten Knoten übermittelte Fragmentseriennummer zu empfangen, wobei der Merkmalwert übermittelt wird, nachdem der erste Knoten den Fragmentierungsprozess der E-Mail-Daten durchgeführt hat, und, wenn basierend auf den historisch übermittelten E-Mail-Daten bestimmt wird, dass das Datenfragment ein Datenfragment ist, das vorher übermittelt wurde; wobei der Merkmalwert benutzt wird, um dem zweiten Knoten Anweisung zu geben, das Datenfragment zu erwerben, und der Merkmalwert übereinstimmend mit dem Datenfragment berechnet wird, indem ein vordefinierter Merkmalwertalgorithmus benutzt wird; und
die Verarbeitungseinheit konfiguriert ist, um die E-Mail-Daten basierend auf jedem empfangenen Datenfragment und/oder empfangenen Merkmalwert zu erzeugen und über die Sende/Empfangseinheit die erzeugten E-Mail-Daten an das Empfangsterminal zu übermitteln.

14. Der Knotenserver gemäss Anspruch 13, bei dem:
Die Sende/Empfangseinheit (702, 802) konfiguriert ist, um ein erstes durch den ersten Knoten übermitteltes Datenpaket zu empfangen, wobei das erste Datenpaket das Datenfragment und den Merkmalwert des Datenfragments einschliesst;
die Verarbeitungseinheit konfiguriert ist, um das Datenfragment und den Merkmalwert des Datenfragments in einem lokalen Cache-Speicher des zweiten Knotens zu speichern, und
die Verarbeitungseinheit weiter konfiguriert ist, um den lokalen Cache-Speicher des zweiten Knotens basierend auf dem Merkmalwert abzufragen, und, wenn das dem Merkmalwert entsprechende Datenfragment im lokalen Cache-Speicher des zweiten Knotens vorhanden ist, um das dem Merkmalwert entsprechende Datenfragment zu erhalten.

15. Der Knotenserver gemäss irgendeinem der Ansprüche 13-14, bei dem die Sende/Empfangseinheit (702, 802) weiter konfiguriert ist, um:
Ein zweites durch den ersten Knoten übermitteltes Datenpaket zu erhalten, wobei das zweite Datenpaket
den Merkmalwert des Datenfragments und die Fragmentseriennummer des Datenfragments einschliesst, wobei die Fragmentseriennummer das Datenfragments auch in dem ersten Datenpaket eingeschlossen ist; und
die Verarbeitungseinheit weiter konfiguriert ist, um:
Jedes Datenfragment basierend auf den ersten Datenpaketen und/oder zweiten Datenpaketen zu erhalten und
jedes Datenfragment in den E-Mail-Daten basierend auf Fragmentseriennummern zu kombinieren.

## Revendications

1. Une méthode de transmission de courrier pour application sur un système de transmission de courrier, comprenant un premier et un deuxième nœud, où le premier nœud est configuré pour recevoir les données de courrier envoyées par un terminal de transmission ; et le deuxième nœud est configuré pour transmettre les données de courrier vers un terminal de réception, la méthode comprenant les pas suivants :
exécuter (S201), par le premier nœud, un processus de fragmentation sur les données de courrier pour obtenir une série de fragments de données ; et
pour chaque fragment de données, à partir des données de courrier transmises historiquement. déterminer (S202), par le premier nœud, si le fragment de données est un fragment de données qui n'a pas été transmis précédemment; et si le fragment de données est un fragment de données qui n'a pas été transmis précédemment, transmettre, par le premier nœud, le fragment de données et le numéro de série du fragment de données vers le deuxième nœud, le numéro de série du fragment étant utilisé pour désigner un numéro séquentiel du fragment de données correspondant au numéro de série du fragment contenu dans les données de courrier ; et
si le fragment de données est un fragment de données qui a été transmis précédemment, transmettre, par le premier nœud, une valeur de caractéristique du fragment de données et le numéro de série du fragment de données du fragment de données vers le deuxième nœud, où ladite valeur de caractéristique est utilisée pour donner l'instruction au deuxième nœud d'obtenir le fragment de données ; et la valeur de caractéristique est calculée conformément au fragment de données en utilisant un algorithme de valeur de caractéristique prédéfini.

2. La méthode conformément à la revendication 1, où, lorsque le fragment de données est un fragment de données qui n'a pas été transmis précédemment, elle comprend en outre las pas suivants :
mettre en cache, par le premier nœud, le fragment de données et la valeur de caractéristique du fragment de données dans un cache local du premier noeud ; et
où la détermination, par le premier nœud, à partir des données de courrier transmises historiquement, si le fragment de données est un fragment de données qui a été transmis précédemment, comprend en outre les pas suivants :
obtenir la valeur de caractéristique du fragment de données ;
interroger le cache local du premier nœud, conformément à la valeur de caractéristique du fragment de données ; et
si la valeur de caractéristique du fragment de données existe dans le cache local du premier nœud, déterminer que le fragment de données est un fragment de données qui a été transmis précédemment ; et
si la valeur de caractéristique du fragment de données n'existe pas dans le cache local du premier nœud, déterminer que le fragment de données est un fragment de données qui n'a pas été transmis précédemment.

3. La méthode conformément à la revendication 1, où, avant d'exécuter, par le premier nœud, le processus de fragmentation sur les données de courrier, elle comprend en outre les pas suivants :
analyser les données de courrier pour déterminer les données essentielles parmi les données de courrier ; ladite exécution du processus de fragmentation sur les données de courrier comprenant en outre l'exécution du processus de fragmentation sur les données essentielles parmi les données de courrier.

4. La méthode conformément à l'une quelconque des revendication 1 à 3, où :
la transmission du fragment de données vers le deuxième nœud comprend en outre les pas suivants :
transmettre un premier paquet de données vers le deuxième nœud, où le premier paquet de données comprend le fragment de données, la valeur de caractéristique du fragment de données et le numéro de série du fragment de données ; et
la transmission de la valeur de caractéristique du fragment de données vers le deuxième nœud comprend en outre les pas suivants :
transmettre un deuxième paquet de données vers le deuxième nœud, où le deuxième paquet de données comprend la valeur de caractéristique du fragment de données et le numéro de série du fragment de données.

5. Une méthode de transmission de courrier pour application sur un système de transmission de courrier comprenant un premier et un deuxième nœud, où le premier nœud est configuré pour recevoir les données de courrier envoyées par un terminal de transmission ; et le deuxième nœud est configuré pour transmettre les données de courrier vers un terminal de réception, la méthode comprenant les pas suivants :
recevoir (S203), par le deuxième nœud, un fragment de données des données de courrier et un numéro de série du fragment du fragment de données transmis par le premier nœud, où le fragment de données est transmis après que le premier nœud ait exécuté le processus de fragmentation sur les données de courrier et lorsqu'il est déterminé, à partir des données de courrier transmis historiquement, que le fragment de données est un fragment de données qui n'a pas été transmis précédemment, le numéro de série du fragment est utilisé pour désigner un numéro séquentiel du fragment de données correspondant au numéro de série du fragment contenu dans les données de courrier ; et/ou
recevoir (S203), par le deuxième nœud, une valeur de caractéristique du fragment de données des données de courrier et un numéro de série du fragment du fragment de données transmis par le premier nœud, où la valeur de caractéristique est transmise après que le premier nœud ait exécuté le processus de fragmentation sur les données de courrier, et lorsqu'il est déterminé, à partir des données de courrier transmis historiquement, que le fragment de données est un fragment de données qui a été transmis précédemment ; où la valeur de caractéristique est utilisée pour donner l'instruction au deuxième nœud d'obtenir le fragment de données, et la valeur de caractéristique est calculée conformément au fragment de données en utilisant un algorithme de valeur de caractéristique prédéfini ;
générer (S204), par le deuxième nœud, les données de courrier, à partir de chaque fragment de données reçu et/ou chaque valeur de caractéristique reçue ; et
transmettre (S205), par le deuxième nœud, les données de courrier générées vers le terminal de réception.

6. La méthode conformément à la revendication 5, où la réception, par le deuxième nœud, du fragment de données des données de courrier transmises par le premier nœud, comprend les pas suivants :
recevoir, par le deuxième nœud, un premier paquet de données transmis par le premier nœud, où le premier paquet de données comprend le fragment de données et la valeur de caractéristique du fragment de données ;
stocker, par le deuxième nœud, le fragment de données et la valeur de caractéristique du fragment de données dans le cache local du deuxième noeud ; et
après avoir reçu, par le deuxième nœud, la valeur de caractéristique du fragment de données des données de courrier transmises par le premier nœud, la méthode comprend en outre les pas suivants :
interroger, par le deuxième nœud, le cache local du deuxième nœud à partir de la valeur de caractéristique ; et
si un fragment de données correspondant à la valeur de caractéristique existe dans le cache local du deuxième nœud, obtenir, par le deuxième nœud, le fragment de données correspondant à la valeur de caractéristique.

7. La méthode conformément à la revendication 6, comprenant les pas suivants :
si le fragment de données correspondant à la valeur de caractéristique n'existe pas dans le cache local du deuxième nœud, envoyer, par le deuxième nœud, une réponse de faille vers le premier nœud, où la réponse de faille comprend la valeur de caractéristique, et la réponse de faille est utilisée pour donner l'instruction au premier nœud de transmettre la valeur de caractéristique et le fragment de données correspondant à la valeur de caractéristique du deuxième nœud.

8. La méthode conformément à l'une quelconque des revendications 5 à 7, où la réception, par le deuxième nœud, de la valeur de caractéristique du fragment de données des données de courrier transmises par le premier nœud comprend en outre les pas suivants :
recevoir, par le deuxième nœud, un deuxième paquet de données transmis par le premier nœud, où le deuxième paquet de données comprend la valeur de caractéristique du fragment de données et le numéro de série du fragment de données, et le numéro de série du fragment de données est également compris dans le premier paquet de données ; et
la génération, par le deuxième nœud, des données de courrier à partir de chaque fragment de données reçu et/ou chaque valeur de caractéristique reçue comprend en outre les pas suivants :
obtenir, par le deuxième nœud, chaque fragment de données à partir des premiers paquets de données et/ou des deuxièmes paquets de données ; et
combiner, par le deuxième nœud, chaque fragment de données dans les données de courrier à partir des numéros de série des fragments.

9. Un serveur de nœuds (700, 800) pour application sur un système de transmission de courrier comprenant un premier et un deuxième nœud, où le premier nœud est configuré pour recevoir les données de courrier transmises par un terminal de transmission, le deuxième nœud étant configuré pour transmettre les données de courrier vers un terminal de réception ; le serveur de nœuds est le premier nœud, et le serveur de nœuds comprend une unité de traitement (701, 801) et une unité d'émission/réception (702, 802), où :
l'unité de traitement (701, 801) est configurée pour exécuter le processus de fragmentation sur les données de courrier pour obtenir une série de fragments de données, et pour chaque fragment de données : déterminer, à partir des données de courrier transmises historiquement, si le fragment de données est un fragment de données qui a été transmis précédemment ; si le fragment de données est un fragment de données qui n'a pas été transmis précédemment, transmettre, au travers de l'unité d'émission/réception (702, 802), le fragment de données et un numéro de série du fragment de données vers le deuxième nœud, ledit numéro de série de fragment étant utilisée pour désigner un numéro de séquence du fragment de données correspondant au numéro de série du fragment dans les données de courrier; et si le fragment de données est un fragment de données qui a été transmis précédemment, transmettre, au travers de l'unité d'émission/réception, une valeur de caractéristique du fragment de données et le numéro de série du fragment de données vers le deuxième nœud, où la valeur de caractéristique est utilisée pour donner l'instruction au deuxième nœud d'obtenir le fragment de données, et la valeur de caractéristique est calculée conformément au fragment de données en utilisant un algorithme de valeur de caractéristique prédéfini.

10. Le serveur de nœuds conformément à la revendication 9, où l'unité de traitement est en outre configurée pour :
mettre en cache le fragment de données et la valeur de caractéristique du fragment de données dans un cache local du premier noeud ; et
l'unité de traitement est configurée pour :
obtenir la valeur de caractéristique du fragment de données ;
interroger le cache local du premier nœud conformément à la valeur de caractéristique du fragment de données ;
si la valeur de caractéristique du fragment de données existe dans le cache local du premier nœud, déterminer que le fragment de données est un fragment de données qui a été transmis précédemment ; et
si la valeur de caractéristique du fragment de données n'existe pas dans le cache local du premier nœud, déterminer que le fragment de données est un fragment de données qui n'a pas été transmis précédemment.

11. Le serveur de nœuds conformément à la revendication 10, où l'unité de traitement est configurée en outre pour :
analyser les données de courrier pour déterminer les données essentielles parmi les données de courrier ; et
l'unité de traitement est configurée pour :
exécuter le processus de fragmentation des données essentielles parmi les données de courrier.

12. Le serveur de nœuds conformément à l'une quelconque des revendications 9 à 11, où l'unité de traitement est en outre configurée pour :
transmettre, au travers de l'unité d'émission/réception, un premier paquet de données vers le deuxième nœud, où, le premier paquet de données comprend le fragment de données, la valeur de caractéristique du fragment de données et le numéro de série du fragment de données ; et
transmettre, au travers de l'unité d'émission/réception, un deuxième paquet de données vers le deuxième nœud, où le deuxième paquet de données comprend la valeur de caractéristique du fragment de données et le numéro de série du fragment de données.

13. Un serveur de nœuds (700, 800) pour application sur un système de transmission de courrier, comprenant un premier et un deuxième nœud, où le premier nœud est configuré pour recevoir les données de courrier envoyées par un terminal de transmission ; et le deuxième nœud est configuré pour transmettre les données de courrier vers un terminal de réception ; le serveur de nœuds et le deuxième nœud, et le serveur de nœuds comprend une unité de traitement et une unité d'émission/réception, où :
l'unité d'émission/réception (702, 802) est configurée pour recevoir un fragment de données des données courrier et un numéro de série du fragment du fragment de données transmis par le premier nœud, où le fragment de données est transmis après que le premier nœud ait exécuté un processus de fragmentation sur les données de courrier et, s'il est déterminé, à partir des données de courrier transmises historiquement, que le fragment de données est un fragment de données qui n'a pas été transmis précédemment, le numéro de série de fragment est utilisé pour désigner un numéro séquentiel du fragment de données correspondant au numéro de série du fragment contenu dans les données de courrier ; et/ou
recevoir une valeur de caractéristique du fragment de données des données de courrier et un numéro de série du fragment transmis par le premier nœud, où la valeur de caractéristique est transmise après que le premier nœud ait exécuté le processus de fragmentation sur les données de courrier, et lorsqu'il est déterminé, à partir des données de courrier transmis historiquement, que le fragment de données est un fragment de données qui a été transmis précédemment ; où la valeur de caractéristique est utilisée pour donner l'instruction au deuxième nœud d'obtenir le fragment de données, et la valeur de caractéristique est calculée conformément au fragment de données en utilisant un algorithme de valeur de caractéristique prédéfini ; et
l'unité de traitement est configurée pour générer les données de courrier à partir de chaque fragment de données reçu et/ou chaque valeur de caractéristique reçue ; et transmettre, au travers de l'unité d'émission/réception, les données de courrier générées vers le terminal de réception.

14. Le serveur de nœuds conformément à la revendication 13, où :
l'unité d'émission/réception (702,802) est configurée pour recevoir un premier paquet de données transmis par le premier nœud, où le premier paquet de données comprend le fragment de données et la valeur de caractéristique du fragment de données ;
l'unité de traitement est configurée pour stocker le fragment de données et la valeur de caractéristiques du fragment de données dans le cache local du deuxième noeud ; et
l'unité de traitement est en outre configurée pour interroger le cache local du deuxième nœud conformément à la valeur de caractéristique ; et si le fragment de données correspondant à la valeur de caractéristique existe dans le cache local du deuxième nœud, obtenir le fragment de données correspondant à la valeur de caractéristique.

15. Le serveur de nœuds conformément à l'une quelconque des revendications 13 et 14, où l'unité d'émission/réception (702, 802) est configurée en outre pour :
recevoir un deuxième paquet de données transmis par le premier nœud, où le deuxième paquet de données comprend la valeur de caractéristique du fragment de données et le numéro de série du fragment de données, et le numéro de série du fragment de données est également compris dans le premier paquet de données ; et
l'unité de traitement est en outre configurée pour obtenir chaque fragment de données à partir du premier paquet de données et/ou du deuxième paquet de données, et pour combiner chaque fragment de données dans les données de courrier à partir des numéros de série des fragments.
